# EUROPEAN PATENT APPLICATION

(11) **EP 2 543 456 A1**
(43) Date of publication of application: **09.01.2013**
(21) Application number: 10840221.5
(22) Date of filing: 02.03.2010
(51) Int. Cl.: B22F 1/02, B22F 1/00

(54) **METHOD FOR PRODUCING POWDER FOR DUST CORE, DUST CORE USING POWDER FOR DUST CORE PRODUCED USING SAID METHOD FOR PRODUCING POWDER FOR DUST CORE, AND DEVICE FOR PRODUCING POWDER FOR DUST CORE**

(71) Applicant: Toyota Jidosha Kabushiki Kaisha, Toyota-shi, Aichi 471-8571 (JP)
(72) Inventor: SUGIYAMA, Masaki, Toyota-shi Aichi 471-8571 (JP); YAMAGUCHI, Toshiya, Toyota-shi Aichi 471-8571 (JP); OHIRA, Shouta, Toyota-shi Aichi 471-8571 (JP)
(74) Representative: Albutt, Anthony John
(86) International application number: PCT/JP2010/053307
(87) International publication number: WO 2011/108072

(57) **Abstract**

To provide a method of manufacturing a powder for dust core capable of preventing generation of secondary particles during a siliconizing treatment and improving quality and productivity of the powder for dust core, a dust core made of the powder for dust core manufactured by the method, and an apparatus for manufacturing the powder for dust core, of a powder mixture (23) comprising a soft magnetic metal powder (21) and a powder for siliconizing (22) including silicon dioxide, only the soft magnetic metal powder (21) is heated by induction heating to transmit heat from the surface of the soft magnetic metal powder (21) to the powder for siliconizing (22), thereby releasing a silicon element from the powder for siliconizing (22) and diffusing and impregnating the silicon element into the surface of the soft magnetic metal powder (21) to form a silicon impregnated layer.

## Description

### Technical Field

The present invention relates to a method of manufacturing a powder for dust core (powder core), a dust core made of the powder for dust core manufactured by the method, and an apparatus for manufacturing the powder for dust core.

### Background Art

A dust core is a product manufactured by pressing and molding a powder for dust core consisting of a soft magnetic metal powder. As compared with a core member formed of laminated electromagnetic steel plates, the dust core can provide more advantages; it has a magnetic characteristic that high-frequency loss (hereinafter, referred to as "iron loss") caused according to frequencies is low, it is adaptable to various shapes on demand and at low cost, a material cost of the dust core is low, and others. Such a dust core is applied to for example a stator core and a rotor core of a motor for driving a vehicle, a reactor core for a power inverter circuit, and others.

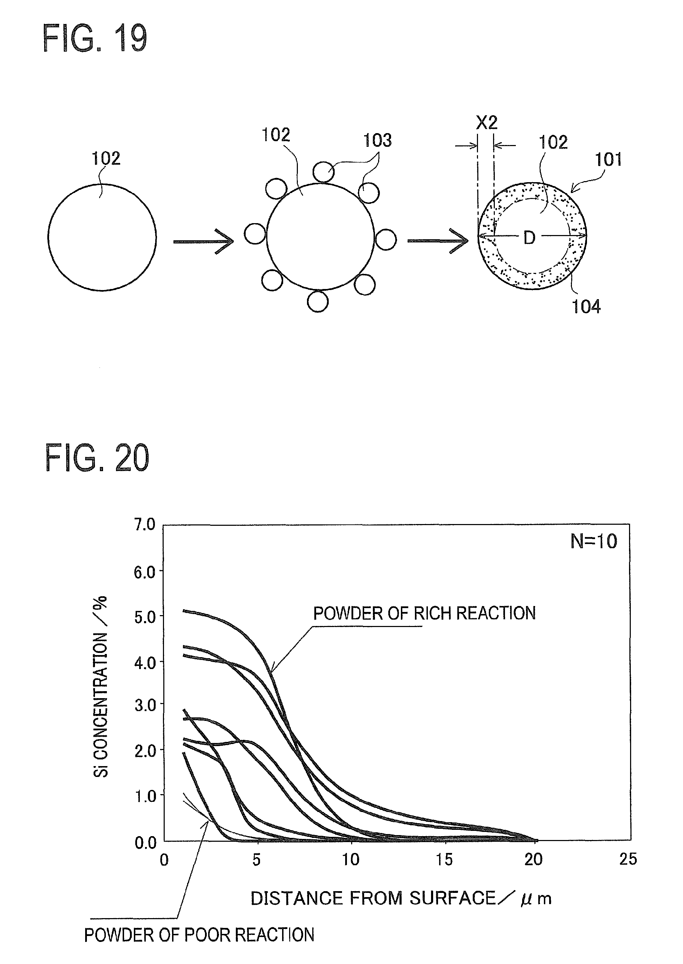

For instance, a powder (particle) 101 for dust core is subjected to a siliconizing treatment (a siliconizing treatment) in which a silicon dioxide powder (particle) 103 is diffused and impregnated into the surface of an iron powder (particle) 102, thereby forming a silicon impregnated layer 104 in which a silicon element is concentrated or enriched in a surface layer of the iron powder 102 as shown in FIG. 19. The siliconizing treatment is carried out by agitating and mixing the iron powders 102 and the silicon dioxide powders 103, thereby making the silicon dioxide powders 103 stick to the surfaces of the iron powders 102, and then a powder mixture of the iron powders 102 and the silicon dioxide powders 103 is put into a furnace. The powder mixture is then heated to 1000°C. Thus, the silicon element is released from the silicon dioxide powders 103 and then diffused and impregnated into the surface layer of each iron powder 102, thereby forming the silicon impregnated layer 104.

When the silicon element is impregnated to the center region of the iron powder 102, hardness of the powder 101 for dust core is increased. In this case, when the dust core powder 101 is pressurized and formed, the powder 101 is not deformed, and gaps between the powders 101 become larger, resulting in a low magnetic core density. The low magnetic core density leads to a low magnetic flux density. Therefore, it is assumed that the silicon impregnated layer 104 is preferably formed to meet a condition that a distance X2 from the surface toward the center of the iron powder 102 is less than 0.15 times the diameter D of the iron powder 102. If the silicon impregnated layer 104 is too thin in thickness or too low in concentration of silicon element, this layer 104 cannot sufficiently insulate a contact portion of the iron powder 102, resulting in high iron loss (mainly hysteresis loss and eddy-current loss). Accordingly, the distance X2 of the layer 104 formed in the powder 101 is very essential in controlling specific resistance of a dust core (e.g., see Patent Literatures 1 and 2).

### Citation List

### Patent Literature

Patent Literature 1: JP2009-256750A
Patent Literature 2: JP2009-123774A

### Summary of Invention

### Technical Problem

However, according to the conventional method of manufacturing a powder for dust core, when ten powders (particles) are randomly taken out from the manufactured dust core powders 101 and subjected to measurement on the distance (the distance from the surface) X2 of the silicon impregnated layer 104 made from the surface toward the center of each iron powder 102 and the concentration of silicon element (Si concentration) of the silicon impregnated layer, the distance X2 from the surface and the Si concentration are very different between the powders as shown in FIG. 20. To be concrete, the taken-out powders include powders having a poor siliconizing reaction (powders low in siliconizing reaction amount) (see lines shown by thin solid lines in FIG. 20). Even the powders having a rich siliconizing reaction (powders high in siliconizing reaction amount) (see lines shown by thick solid lines in FIG. 20) shows that Si concentration in the surface of the iron powder 102 is widely dispersed from about 2.0% to about 5.0%, and the distance (thickness) X2 of the silicon impregnated layer 104 from the surface of the iron powder 102 is dispersed from about 4 µm to about 20 µm. Furthermore, the powders having a rich siliconizing reaction vary widely in the rate at which the Si concentration of the silicon impregnated layer 104 decreases from the surface toward the center of the powder 102. According to the conventional method of manufacturing a powder for dust core, therefore, the iron powders 102 could not be siliconized uniformly. It is therefore impossible to uniformize the silicon impregnated layers 104 to be formed in the dust core powder 101. Accordingly, in a process of making a dust core, if the dust core powders 101 contact with each other through the silicon impregnated layers 104 at portions with thin thickness (distance from the surface) X2 or portions with low Si concentration, the eddy-current occurring in the dust core increases due to a low insulating property of the contact portions, thus causing a problem with low specific resistance. To the contrary, the powders 101 having the silicon impregnated layers 104 with a large thickness (distance from the surface) X2 are hard, leading to decreases in magnetic core density and magnetic flux density.

The reason why the conventional dust core powder manufacturing method causes variations in the thickness (the distance from the surface) X2 and the Si concentration of silicon impregnated layer 104 between the dust core powders 101 is considered as below. Since the powder mixture of the iron powders 102 and the silicon dioxide powders 103 fed into a furnace is heated without rotating the furnace, positions of the iron powders 102 and the silicon dioxide powders 103 are not changed during a siliconizing treatment. In the iron powder 102 surrounded by a large number of silicon dioxide powders 103, a large amount of silicon elements is diffused and impregnated into each surface layer, so that the thickness and the Si concentration of each silicon impregnated layer 104 are large. In contrast, in the iron powder 102 surrounded by a small amount of silicon dioxide powders 103, an amount of silicon element diffused and impregnated into each surface layer is small, so that the thickness and the Si concentration of the silicon impregnated layer 104 are decreased.

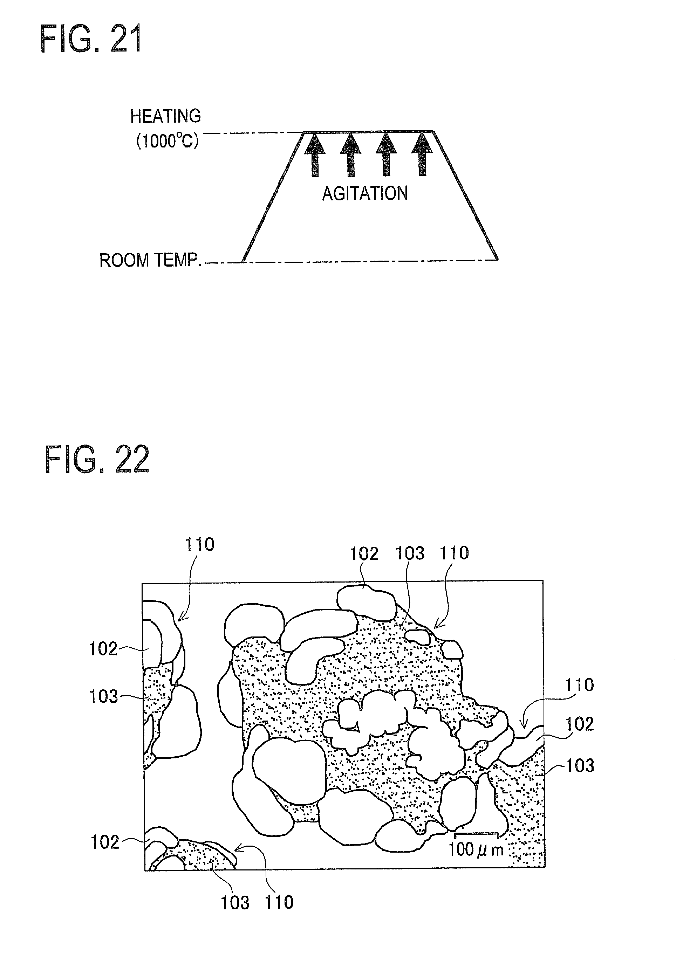

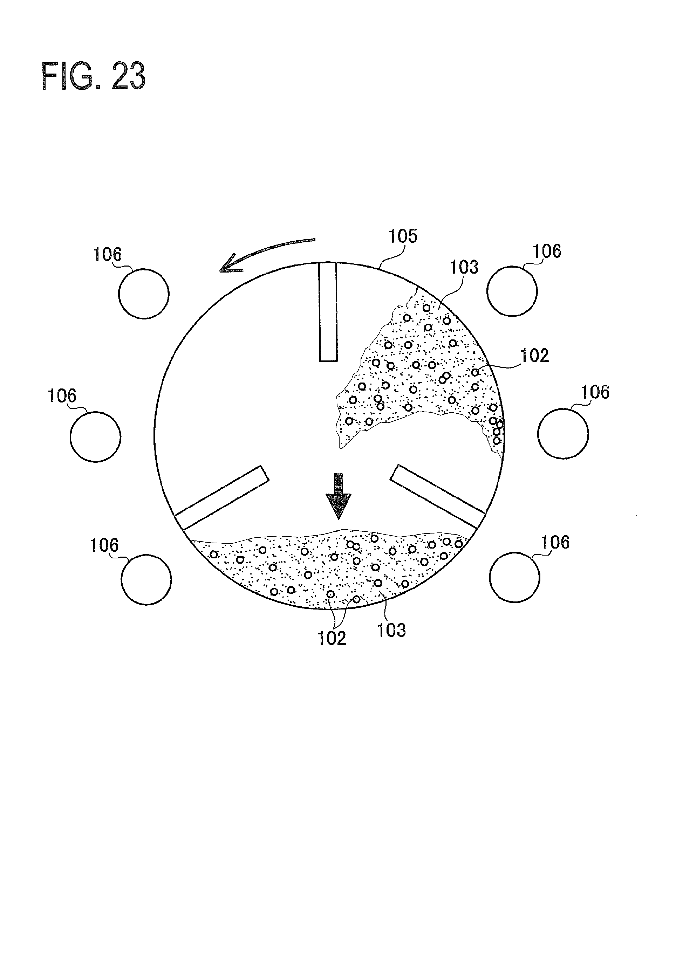

Therefore, the inventors tried manufacturing the powder for dust core in the following manner. Specifically, a powder mixture obtained by mixing and agitating iron powders 102 with a mean particle diameter of 200 µm and silicon dioxide powders 103 with a mean particle diameter of 50 nm is put into a furnace 105, and then the furnace 105 is heated by heaters 106 placed around the furnace 105 as shown in FIGs. 21 and 23. While the internal temperature of the furnace 105 is controlled to 1000°C, the furnace 105 is rotated to agitate the powder mixture continuously for one hour, thereby producing the powder for dust core. The inventors consider that the silicon dioxide powders 103 uniformly stick to the periphery of each iron powder 102 by changing placement in the siliconizing treatment, thereby inducing uniform siliconizing reaction of the iron powder 102.

However, when a product produced according to the above dust core powder manufacturing method is taken out of the furnace 105, the iron powders 102 and the silicon dioxide powders 103 aggregated into secondary particles 110 as shown in FIG. 22. In each secondary particle 110, the silicon dioxide powders 103 (see dotted portions) have been sintered, binding a plurality of iron powders 102 into a cluster with a diameter as large as 600 µm to 700 µm. The reason why the secondary particles 110 are generated is considered as below.

It is known that sintering starts at a temperature of two-thirds of a melting point. A melting point of silicon dioxide is 1600°C ± 75°C. On the other hand, a heating temperature of the powder mixture in the siliconizing treatment is 1000°C. Thus, the heating temperature of 1000°C for the powder mixture corresponds to just about two-thirds of the melting point of silicon dioxide. When the powder mixture is heated to 1000°C, a silicon element is released from the silicon dioxide powders 103 sticking to the surfaces of the iron powders 102 and is diffused and impregnated. If the heating time is long, substances move between the silicon dioxide powders 103 and sintering occurs. Sintering also occurs in the silicon dioxide powders 103 diffused and bonded in the surfaces of the iron powders 102. Accordingly, the iron powders 102 are bonded to each other through the sintered silicon dioxide powders 103. Especially, according to the aforementioned manufacturing method of powder for dust core, as shown in FIGs. 21 and 23, while heating the powder mixture at 1000°C, the furnace 105 is continuously rotated for one hour to repeatedly drop the powder mixture of the iron powders 102 and the silicon dioxide powders 103 from high to low for agitation. In this case, the silicon dioxide powders 103 in a lower place are compressed by the weight of the powder mixture dropping from above, and sintering of the silicon dioxide powders 103 is prompted. As above, in simple agitating of the powder mixture under heating at 1000°C in the siliconizing treatment, the silicon dioxide powders 103 are apt to be pressurized and sintered, thus generating the secondary particles 110. As a result, quality and productivity of the powder for dust core are deteriorated.

The present invention has been made to solve the above problems and has a purpose to provide a manufacturing method of powder for dust core, capable of preventing generation of secondary particles in a siliconizing treatment and improving quality and productivity of the powder for dust core, a dust core made of the powder manufactured by the method, and an apparatus for manufacturing the powder for dust core.

### Solution to Problem

To achieve the above purpose, one aspect of the invention provides a method of manufacturing a powder for dust core, wherein a powder mixture of a soft magnetic metal powder and a powder for siliconizing including silicon dioxide is agitated and mixed while heating only the soft magnetic metal powder by induction heating, so that a silicon impregnated layer on a surface of the soft magnetic metal powder.

In the manufacturing method of powder for dust core in the above aspect, preferably, a rotary furnace into which the powder mixture is fed is made of an insulator, a coil is placed outside the rotary furnace, and the coil is supplied with current while the rotary furnace is rotated inside the coil to induction heat only the soft magnetic metal powder included in the powder mixture.

In the manufacturing method of powder for dust core in the above aspect, preferably, the coil has a hollow cylindrical form, and the rotary furnace is placed in a hollow part of the coil.

To achieve the above purpose, another aspect of the invention provides a dust core made by pressing the powder for dust core manufactured by the dust core powder manufacturing method mentioned above.

To achieve the above purpose, another aspect of the invention provides an apparatus for manufacturing a powder for dust core, comprising: a rotary furnace into which a powder mixture comprising a soft magnetic metal powder and a powder for siliconizing including silicon dioxide is fed, the rotary furnace being held to be rotatable about an axis and provided with an agitating member placed in a protruding state from an inner wall of the rotary furnace; a motor for driving the rotary furnace; and a coil placed outside the rotary furnace to cover at least a bottom of the rotary furnace, wherein the motor is driven to rotate the rotary furnace while the coil is supplied with current to induction heat only the soft magnetic metal powder to form a silicon impregnated layer on a surface of the soft magnetic metal powder.

In the apparatus for manufacturing a powder for dust core in the above aspect, preferably, the rotary furnace is made of an insulator.

In the apparatus for manufacturing a powder for dust core in the above aspect, preferably, a temperature sensor for measuring a surface temperature of the soft magnetic metal powder, the temperature sensor being placed inside the rotary furnace, and a controller for controlling a frequency of the current to be supplied to the coil so that temperature data measured by the temperature sensor is stable at a predetermined treatment temperature.

### Advantageous Effects of Invention

According to the method and the apparatus for manufacturing a powder for dust core in the above aspects, of the powder mixture comprising the soft magnetic metal powder and the powder for siliconizing including silicon dioxide, only the soft magnetic metal powder is heated by induction heating. Thus, the silicon element releasing from the powder for siliconizing is diffused and impregnated into the surface of the soft magnetic metal powder, thereby forming the silicon impregnated layer. At that time, only the soft magnetic metal powder is heated and the powder for siliconizing is not heated. Even when the powder mixture is agitated and mixed while induction heating the soft magnetic metal powder, the powder for siliconizing is not sintered. Further, since the powder mixture is agitated and mixed, positions of the soft magnetic metal powders are constantly changed, thereby uniformizing the silicon impregnated layer to be formed on the surface of the soft magnetic metal powder. According to the method and the apparatus for manufacturing a powder for dust core in the above aspects, it is possible to prevent generation of secondary particles during a siliconizing treatment and improve quality and productivity of the powder for dust core.

In the method and the apparatus for manufacturing a powder for dust core in the above aspects, the rotary furnace is made of an insulator. Accordingly, even when the coil placed outside the rotary furnace is supplied with current while the rotary furnace is being rotated, the rotary furnace is not heated and only the soft magnetic metal powder is heated. Such apparatus does not heat the powder for siliconizing through the rotary furnace. Thus, the powder for siliconizing is not sintered.
Herein, in the case where the coil is of a cylindrical form and the rotary furnace is placed in a hollow part of the coil, the magnetic flux density generated in the rotary furnace during current supply to the coil is uniform in the axis direction and the circumferential direction of the rotary furnace. Therefore, the magnetic fluxes pass through the soft magnetic metal powders in the rotary furnace and thus the powders generate eddy currents, so that the surface of each soft magnetic metal powder is uniformly heated. As a result, the silicon dioxide powders are uniformly diffused and impregnated into the surface of the soft magnetic metal powder. In the soft magnetic metal powder, the silicon impregnated layer is uniformly formed in the surface.

In the apparatus for manufacturing a powder for dust core in the above aspects, the temperature sensor placed inside the rotary furnace measures a surface temperature of the soft magnetic metal powder and the frequency of a current to be supplied to the coil is controlled so that temperature data measured by the temperature sensor is stable at a predetermined treatment temperature. This makes it possible to prevent the surface of the soft magnetic metal powder from being excessively heated and thus the powder from being sintered.

In the dust core produced by pressing the powder for dust core manufactured by the manufacturing method in the above aspect, the silicon impregnated layer is uniformly formed in the surface of each soft magnetic metal powder of the dust core powder. Thus, high magnetic core density, high magnetic flux density, and high specific resistance can be achieved.

### Brief Description of Drawings

FIG. 1 is a schematic configuration view of an apparatus for manufacturing a powder for dust core in a first embodiment of the present invention;
FIG. 2 is a sectional view of a rotary furnace taken along a line A-A in FIG. 1;
FIG. 3 is a sectional view of the rotary furnace taken along a line B-B in FIG. 2, in which arrows in the figure represent magnetic fluxes;
FIG. 4 is a view to explain a siliconizing treatment, showing a powder mixture feeding step;
FIG. 5 is a view to explain the siliconizing treatment, showing an agitating step;
FIG. 6 is a conceptual drawing showing a relationship between iron powder and silicon dioxide powder in a state before induction heating;
FIG. 7 is a conceptual drawing showing a relationship between the iron powder and the silicon dioxide powder in a state after the iron powder is subjected to the induction heating;
FIG. 8 is a conceptual drawing showing a relationship between the iron powder and the silicon dioxide powder in a state where the silicon dioxide powder is heated by heat transfer from a surface of the iron powder;
FIG. 9 is a view to explain siliconizing reaction in a method of manufacturing a powder for dust core, showing a state where silicon dioxide powders stick to an iron powder;
FIG. 10 is a view to explain the siliconizing reaction in the method of manufacturing a powder for dust core, showing a state where the silicon dioxide powders are heated by the iron powder;
FIG. 11 is a view to explain the siliconizing reaction in the method of manufacturing a powder for dust core, showing a state where the silicon dioxide powders are diffused and bonded into the iron powder;
FIG. 12 is a view to explain the siliconizing reaction in the method of manufacturing a powder for dust core, showing a state where other silicon dioxide powders stick to the iron powder;
FIG. 13 is a conceptual drawing showing a cross section of the iron powder subjected to the siliconizing treatment;
FIG. 14 is a conceptual drawing showing a cross section of a powder for dust core;
FIG. 15 is a table showing conditions of the siliconizing treatment in a comparative example and the embodiment;
FIG. 16 is a graph showing yield percentages in the comparative example and the embodiment;
FIG. 17 is a graph showing results of examination of the dust core powder in the embodiment on distance of a silicon impregnated layer from a surface toward a center of an iron powder;
FIG. 18 is a schematic configuration view of an apparatus for manufacturing a powder for dust core in a second embodiment of the present invention;
FIG. 19 is a conceptual drawing of a siliconizing treatment;
FIG. 20 is a graph showing results of examination of the dust core powder on distance of a silicon impregnated layer formed from a surface toward a center of an iron powder;
FIG. 21 is a conceptual drawing of a treatment of heating a powder mixture under agitation;
FIG. 22 is a diagram graphically showing a micrograph of powder for dust core obtained when the powder mixture is heated under agitation; and
FIG. 23 is a conceptual drawing of an apparatus for heating a powder mixture under agitation.

### Reference Signs List

- 1, 51: Apparatus for manufacturing a powder for dust core
- 2: Rotary furnace
- 7: Motor
- 8: Controller
- 10: Agitating plate
- 14, 52: Coil
- 15: Temperature sensor
- 21: Carbon-iron metal powder (one example of Soft magnetic metal powder)
- 22: Silicon dioxide powder (one example of Powder for siliconizing)
- 23: Powder mixture
- 24: Iron powder (one example of Soft magnetic metal powder)
- 25: Silicon impregnated layer
- 28: Powder for dust core

### Description of Embodiments

A detailed description of a preferred embodiment of a method of manufacturing a powder for dust core, a dust core made of the powder manufactured by the method, and an apparatus for manufacturing the powder for dust core embodying the present invention will now be given referring to the accompanying drawings.

### (First embodiment)

### <Schematic configuration of powder for dust core>

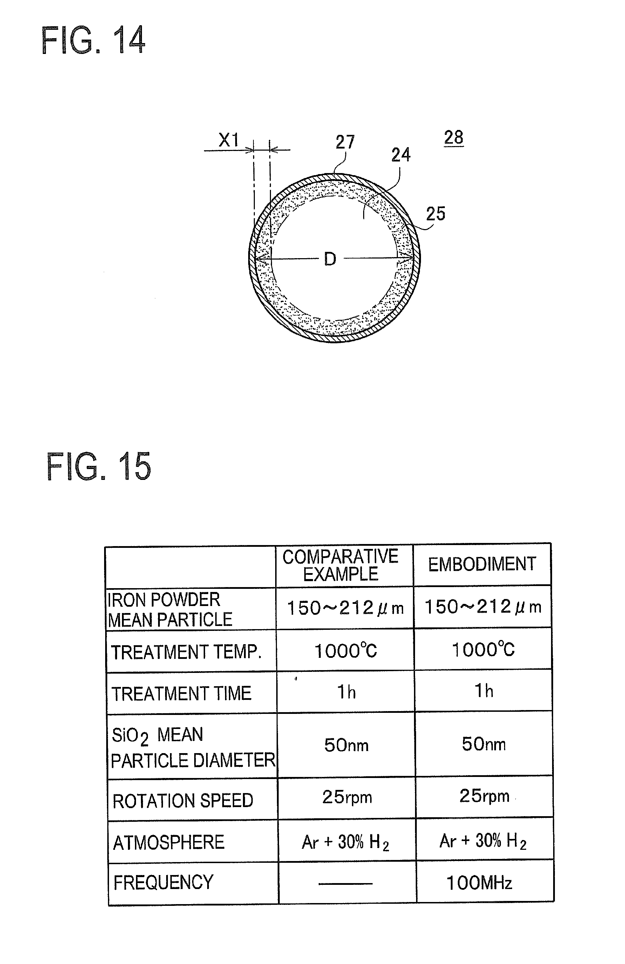

FIG. 14 is a conceptual drawing showing a cross section of a powder (particle) 28 for dust core. This powder 28 is formed with a silicon impregnated layer 25 in a surface layer of an iron powder (particle) 24 (one example of a soft magnetic metal powder) by oxidation-reduction reaction of a carbon-iron metal powder (particle) 21 and a silicon dioxide powder (particle) 22 (one example of a powder for siliconizing) in order to ensure insulation of the iron powder 24. The dust core powder 28 further includes a silicone coating layer 27 covering the surface of the iron powder 24, thus providing enhanced insulating property.

### <Schematic configuration of an apparatus for manufacturing the powder for dust core>

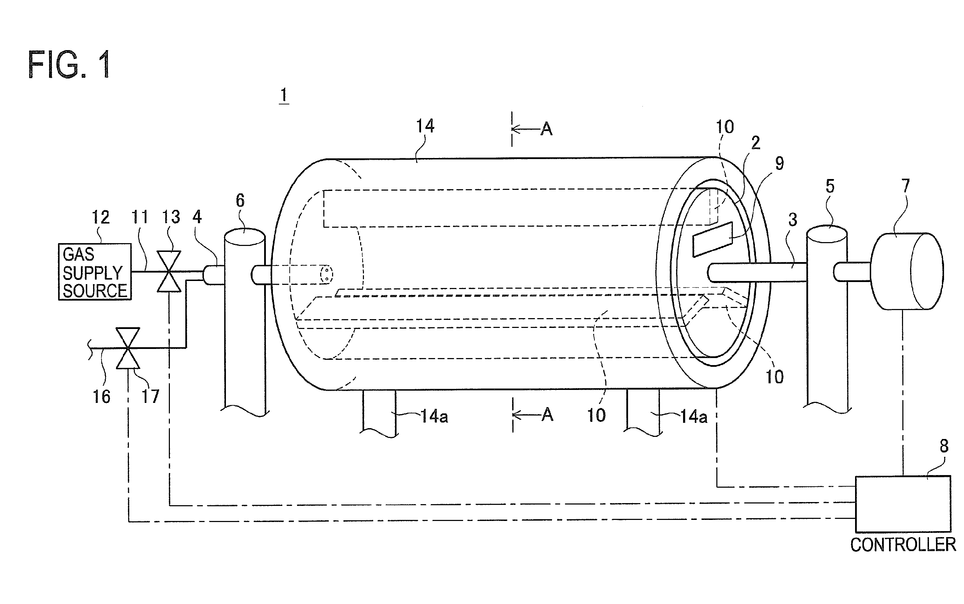

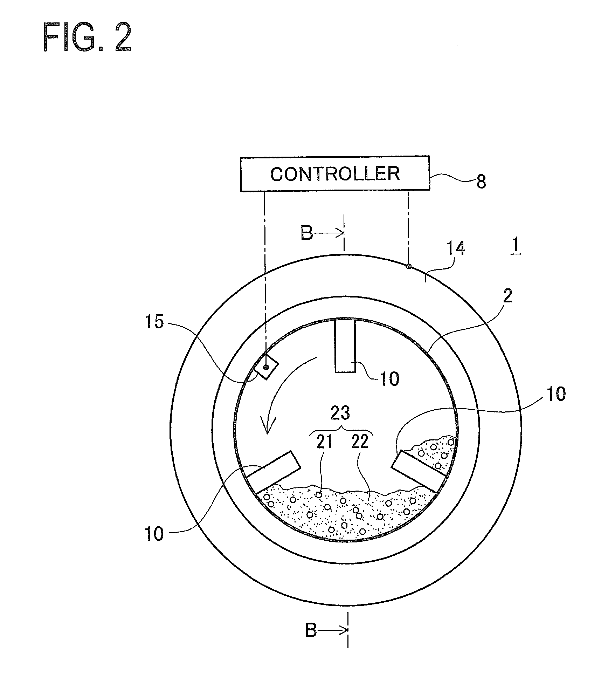

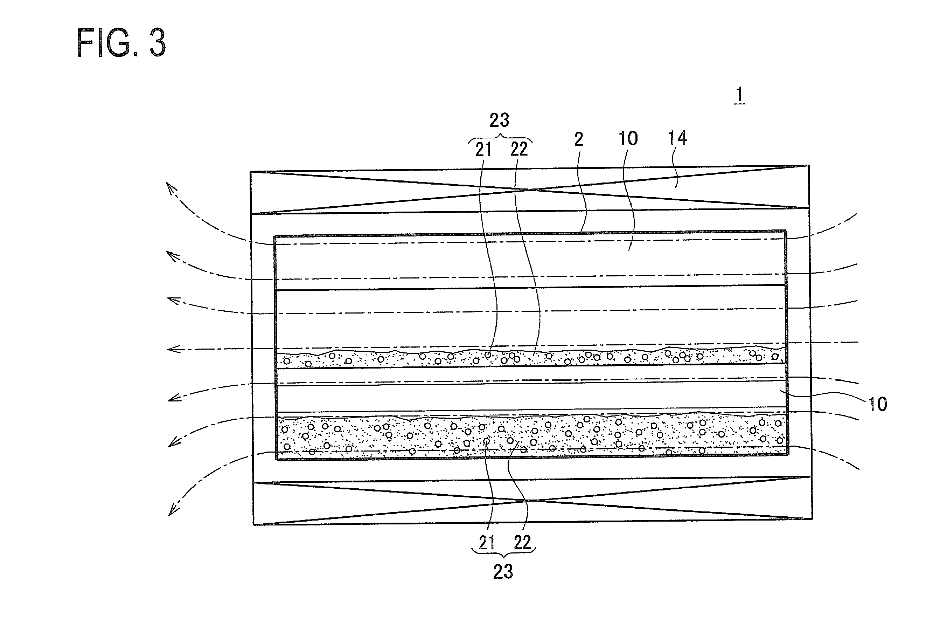

FIG. 1 is a schematic configuration view of a manufacturing apparatus 1 for a powder for dust core in the first embodiment of the invention. FIG. 2 is a sectional view of a rotary furnace taken along a line A-A in FIG. 1. FIG. 3 is a sectional view of the rotary furnace taken along a line B-B in FIG. 2. In FIG. 3, arrows represent magnetic fluxes.

The manufacturing apparatus 1 for a powder for dust core shown in FIGs. 1 to 3 is used in one step of manufacturing the dust core powder 28, i.e., in a siliconizing treatment step of forming the silicon impregnated layer 25 in a surface layer of the iron powder 24.

The manufacturing apparatus 1 includes a rotary furnace 2 of a hollow cylindrical shape. The rotary furnace 2 is made of an insulator (e.g., ceramics) that is not heated by high-frequency induction heating. A coil 14 is made of a cylindrically wound wire in a hollow cylindrical form. The rotary furnace 2 is placed in a hollow part of the coil 14 so that an outer periphery of the rotary furnace 2 is entirely covered by the coil 14. The coil 14 is supported by support rods 14a. The rotary furnace 2 is held to be rotatable in the coil 14. To be concrete, rotation shafts 3 and 4 are fixed to both end faces of the rotary furnace 2 so that the rotary furnace 2 is rotatably supported by support rods 5 and 6 via the rotation shafts 3 and 4. The rotation shaft 3 is connected to a motor 7 that imparts torque to the rotary furnace 2 via the rotation shaft 3. The motor 7 is connected to a controller 8 and controlled thereby for a rotation operation to rotate the rotary furnace 2 (a rotation amount, a rotation speed, a rotation time, etc.) and a rotation stop operation to stop the rotation of the rotary furnace 2.

The rotary furnace 2 includes a door 9 arranged to open and close. Powder is supplied into or removed from the rotary furnace 2 through this door 9. On the inner wall of the rotary furnace 2, a plurality (three in this embodiment) of agitating plates 10 (one example of an agitating member) are fixedly provided to scoop up and drop powders in association with rotation of the rotary furnace 2. Each agitating plate 10 is made of a linear plate-like insulator (e.g., ceramic) that is not heated by high-frequency induction heating. The agitating plates 10 are arranged in parallel with an axis of the rotary furnace 2 and circumferentially at even intervals in a cross section of the rotary furnace 2 so that each plate 10 protrudes toward the center of the rotary furnace 2.

In the rotation shaft 4, two flow channels are formed along the axis of the rotation shaft 4. One of the flow channels of the rotation shaft 4 is connected to a supply pipe 11 for supplying process gas for producing an atmosphere for siliconizing treatment. The other flow channel is connected to a discharge pipe 16 for discharging gas out of the rotary furnace 2. In the supply pipe 11, a supply valve 13 is placed to control a supply amount of the process gas to be supplied from a gas supply source 12. In the discharge pipe 16, a discharge valve 17 is placed to control a discharge amount of the gas to be discharged from the rotary furnace 2. The supply valve 13 and the discharge valve 17 are connected to the controller 8 to control respective valve opening degrees.

As shown in FIG. 2, a temperature sensor 15 is attached to the inner wall of the rotary furnace 2 to measure the temperature of powder. The controller 8 is connected to the temperature sensor 15 and the coil 14 to control the frequency of an electric current to be supplied to the coil 14 so that temperature measurement data of the temperature sensor 15 be stable at a predetermined treatment temperature.

### <Method of manufacturing a powder for dust core>

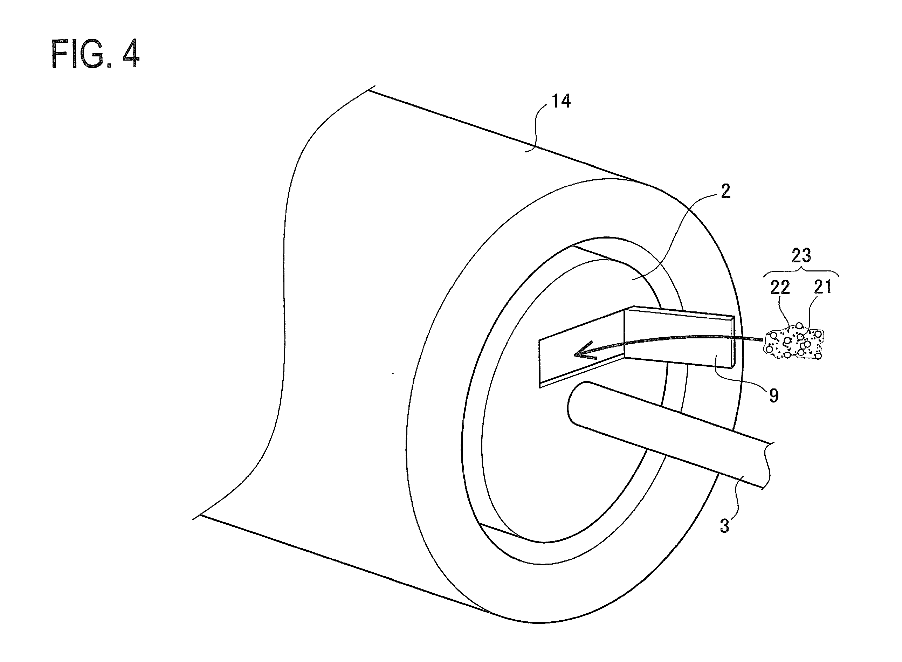

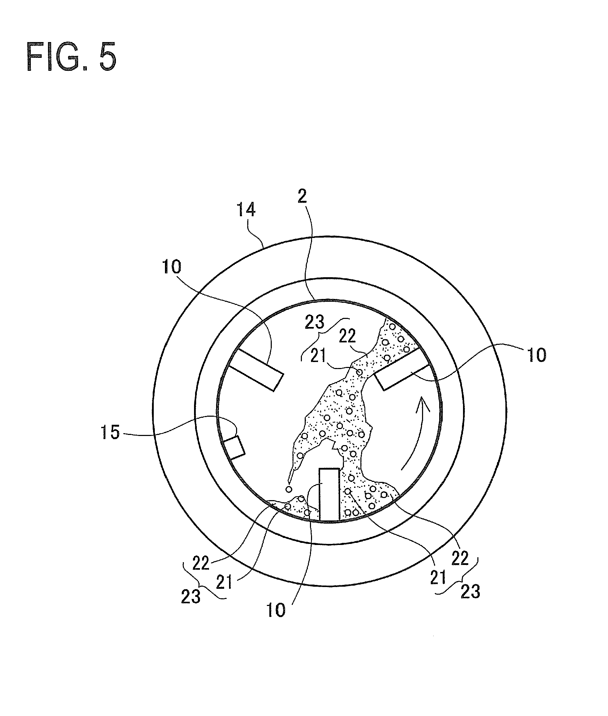

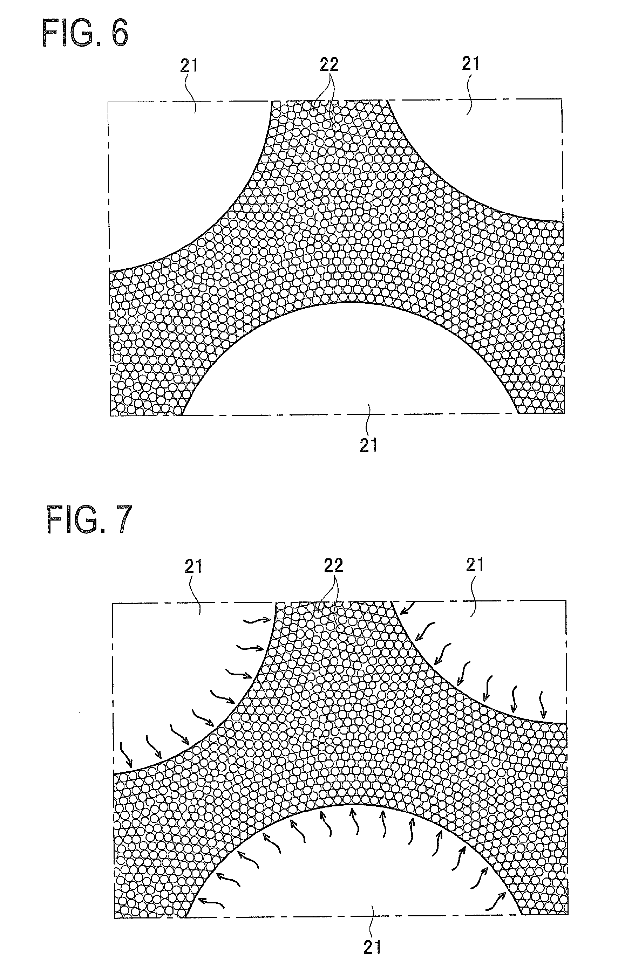

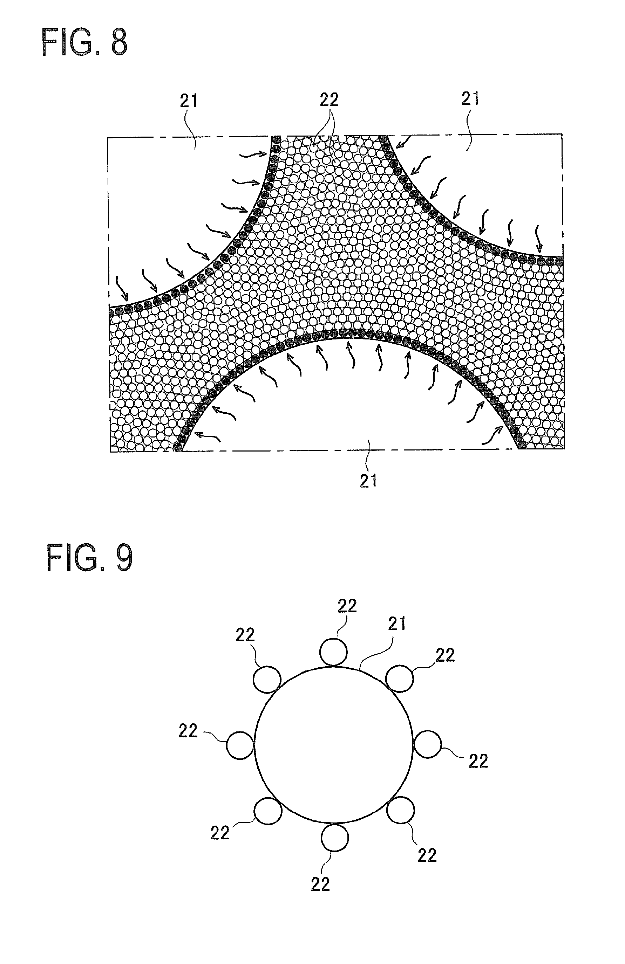

A method of manufacturing the powder for dust core is explained below. FIG. 4 is a view to explain a siliconizing treatment, showing a powder mixture feeding step. FIG. 5 is a view to explain the siliconizing treatment, showing an agitating step. FIGs. 6 to 8 are conceptual drawings showing a relationship between carbon-iron metal powders 21 and silicon dioxide powders 22. FIGs. 9 to 13 are views to explain siliconizing reaction in the dust core powder manufacturing method. FIG. 14 is a conceptual drawing showing a cross section of the powder 28 for dust core.

Firstly, the silicon dioxide powders 22 are mixed with the carbon-iron metal powders 21. This mixture is agitated so that the silicon dioxide powders 22 stick to the outer periphery of each carbon-iron metal powder 21. For instance, 95-97 weight% of carbon steel powder (iron powder) having a carbon content of 1.5 weight% and a mean particle diameter of 150 to 212 µm and 3-5 weight% of silicon dioxide powder having a mean particle diameter of 50 nm and a specific gravity of 2.2 are mixed and agitated to prepare a powder mixture 23. As shown in FIG. 4, the door 9 of the rotary furnace 2 is opened. The powder mixture 23 consisting of the carbon-iron metal powders 21 and the silicon dioxide powders 22 is fed into the rotary furnace 2. Then, the door 9 is hermetically closed.

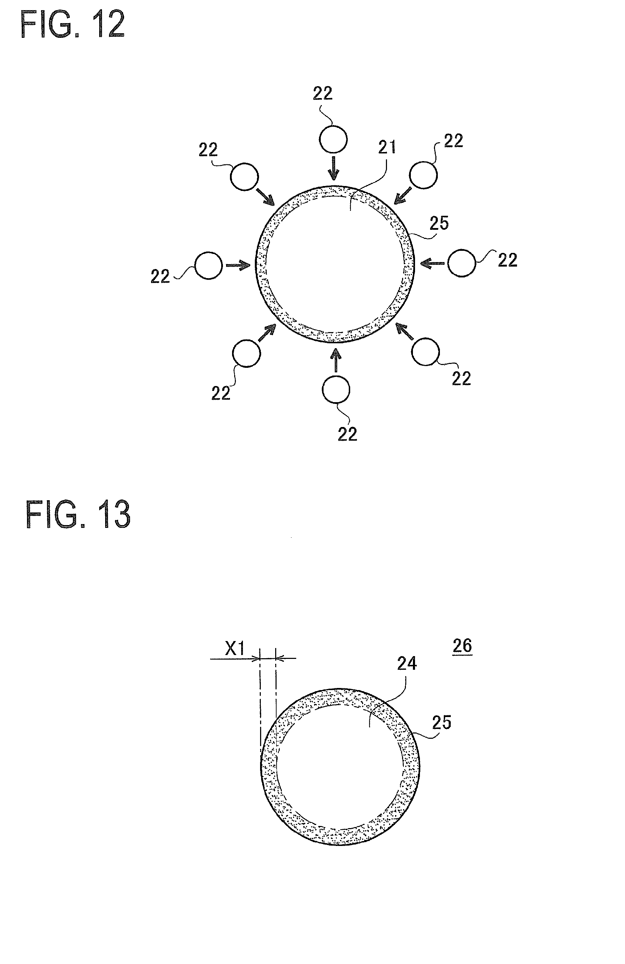

The coil 14 is supplied with an electric current of a predetermined frequency, thereby mixing and agitating the powder mixture 23 while induction heating only the carbon-iron metal powders 21 as shown in FIG. 5. Thus, the silicon impregnated layer 25 is formed in the surface of the iron powder 24 as shown in FIG. 13.

To be concrete, the controller 8 opens the supply valve 13 and the discharge valve 17 shown in FIG. 1 and supplies the process gas (e.g., a mixed gas of argon (Ar) and hydrogen (H2)) from the gas supply source 12 to the rotary furnace 2 in order to induce oxidation-reduction reaction of the carbon-iron metal powders 21 and the silicon dioxide powders 22. The controller 8 supplies an electric current of a predetermined frequency to the coil 14.

The powder mixture 23 consists of 3-5 weight% of carbon-iron metal powder 21 and 95-97 weight% of silicon dioxide powder 22 which are mixed under agitation. In addition, a specific gravity of the carbon-iron metal powder 21 is 7.8, whereas a specific gravity of the silicon dioxide powder 22 is 2.2. Thus, most of the powder mixture 23 consists of the silicon dioxide powders 22. In the rotary furnace 2, therefore, many silicon dioxide powders 22 are present in layers between the carbon-iron metal powders 21 as shown in FIG. 6, separating the carbon-iron metal powders 21 from each other. In such a state, when the coil 14 is supplied with current, magnetic fluxes occur in the rotary furnace 2 as indicated by alternate long and short dash arrowed lines in FIG. 3. Since the coil 14 is placed in annular form to cover the entire outer periphery of the rotary furnace 2, the magnetic flux density is uniform in the axis direction and the circumferential direction of the rotary furnace 2. The magnetic fluxes uniformly generated in the entire rotary furnace 2 pass through the carbon-iron metal powders 21 of the powder mixture 23 and thus the powders 21 generate eddy current by electromagnetic induction as shown in FIG. 7. Thus, the surfaces of the carbon-iron metal powders 21 generate heat due to the skin effect. On the other hand, the silicon dioxide powders 22 having no conductivity generate no heat even when the coil 14 is applied with current. However, as a heating time passes, the silicon dioxide powders 22 contacting the surface of each carbon-iron metal powder 21 are heated as indicated by black circles in FIG. 8 by heat transfer from the surfaces of the carbon-iron metal powders 21.

When the temperature sensor 15 detects a predetermined temperature (e.g., 1000°C), the controller 8 determines that the surface temperature of the carbon-iron metal powders 21 reaches the predetermined treatment temperature and then activates the motor 7. Thereby the rotary furnace 2 is rotated at a predetermined rotation speed in the coil 14 as shown in FIG. 5. In association with the rotation of the rotary furnace 2, the powder mixture 23 in the rotary furnace 2 are sequentially scooped up by the agitating plates 10 from the bottom of the rotary furnace 2 to a predetermined level and then slip off the agitating plates 10 directed in an obliquely downward direction, dropping toward the bottom of the rotary furnace 2. Accordingly, the powder mixture 23 is agitated and mixed, thereby constantly changing the positions of the carbon-iron metal powders 21 and the silicon dioxide powders 22.

As described above, the surfaces of the carbon-iron metal powders 21 having electrical conductivity are induction-heated by the magnetic fluxes (the magnetic field) uniformly occurring in the coil 14 when the coil 14 is supplied with current of a predetermined frequency. In contrast, the silicon dioxide powders 22 having no electrical conductivity are not heated even when the magnetic field occurs in the coil 14. Further, the rotary furnace 2 and the agitating plates 10 are made of insulators which are not heated by high-frequency heating. Accordingly, even when the coil 14 is supplied with current, the rotary furnace 2 and the agitating plates 10 are not heated and hence do not heat the silicon dioxide powders 22. The temperature of the silicon dioxide powders 22 therefore do not rise to the predetermined treatment temperature (e.g., 1000°C) during agitating and mixing of the powder mixture 23. Even when the silicon dioxide powders 22 are allowed to drop from the predetermined level to the bottom of the rotary furnace 2 and be compressed, the silicon dioxide powders 22 do not pressurize and sinter with other silicon dioxide powders 22.

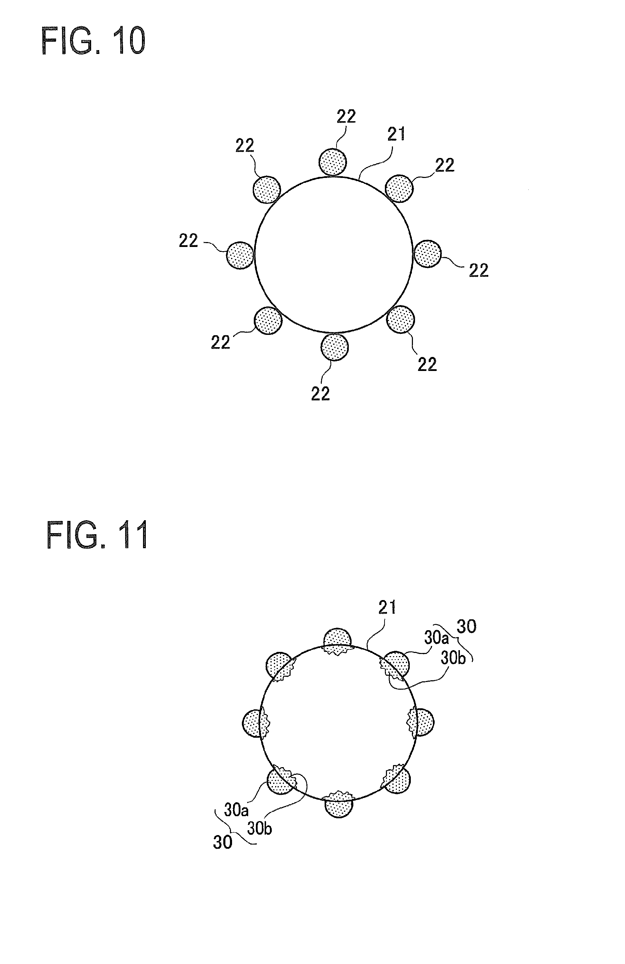

On the other hand, when the surfaces of the carbon-iron metal powders 21 are heated to the predetermined treatment temperature, the silicon dioxide powders 22 contacting with the surfaces of the carbon-iron metal powders 21 as shown in FIG. 9 are heated by heat transfer from the carbon-iron metal powder 21 as shown in FIG. 10 (see dot-hatching portions). Thus, the oxidation-reduction reaction occurs between the carbon-iron metal powder 21 and the silicon dioxide powders 22 contacting with the surface of the powder 21, causing a silicon element to be released from the silicon dioxide powders 22 and generate carbon monoxide (CO) gas. The released silicon element is impregnated or permeated from the surface of the carbon-iron metal powder 21 and diffused therein as shown in FIG. 11, and form a silicon impregnated layer 25 in the surface layer of the powder 21 as shown in FIG. 12.

In the course of diffusion and impregnation of the silicon dioxide powders 22, as shown in FIG. 11, each silicon dioxide powder 22 forms a diffusion-bonded part 30 including a diffused portion 30b made of a part of the silicon dioxide powder 22 diffused and impregnated in the carbon-iron metal powder 21 and a protruding portion 30a made of the other part of the silicon dioxide powder 22 remaining protruding from the carbon-iron metal powder 21. The diffusion-bonded parts 30 are chemically bonded to the surface of the carbon-iron metal powder 21. Therefore, the diffusion-bonded parts 31 do not come off the surface of the carbon-iron metal powder 21 during mixing and agitating of the powder mixture 23 and thus are stably impregnated and diffused in the surface of the carbon-iron metal powder 21.

Herein, the diffusion-bonded parts 30 are heated up to the predetermined treatment temperature by heat transfer from the surface of the carbon-iron metal powder 21. However, silicon dioxide powders 22 located around the diffusion-bonded parts 30 are agitated by rotation of the rotary furnace 2, freely changing their positions with respect to the carbon-iron metal powders 21. Accordingly, the silicon dioxide powders 22 are not heated to the predetermined treatment temperature (e.g., 1000°C) by heat transfer from the diffusion-bonded parts 30. Even when the silicon dioxide powders 22 located around the diffusion-bonded parts 30 are compressed by the rotation of the rotary furnace 2, those silicon dioxide powders 22 do not pressurize and sinter with the diffusion-bonded parts 30 and other silicon dioxide powders 22. In other words, the silicon dioxide powders 22 are not sintered around the carbon-iron metal powder 21 as a core and hence do not aggregate into a secondary particle.

After the silicon dioxide powders 22 contacting with the surfaces of the carbon-iron metal powders 21 are diffused and impregnated, as shown in FIG. 12, other silicon dioxide powders 22 stick to the surfaces of the carbon-iron metal powders 21 and diffused and impregnated therein in the same manner as above. The cylindrical coil 14 is placed to cover the entire periphery of the rotary furnace 2 and the magnetic flux density uniformly occurs in the rotary furnace 2 in the axis direction and the circumferential direction of the rotary furnace 2. Accordingly, the magnetic fluxes pass through the carbon-iron metal powders 21 in the rotary furnace 2. In addition, the carbon-iron metal powder 21 is of a spherical shape. Accordingly, the surface of each carbon-iron metal powder 21 in the rotary furnace 2 is heated substantially uniformly by the skin effect. By mixing under agitation by rotation of the rotary furnace 2, the surface of each carbon-iron metal powder 21 is evenly supplied with the silicon dioxide powders 22. In the powder mixture 23, therefore, the silicon dioxide powders 22 contacting the surface of each carbon-iron metal powder 21 are diffused and impregnated first into the surface of each carbon-iron metal powder 21. And, the siliconizing reaction in the surface of each carbon-iron metal powder 21 advances uniformly. In other words, the silicon impregnated layer 25 is uniformly formed in the surfaces of the carbon-iron metal powders 21.

Herein, during the siliconizing treatment, the controller 8 controls a current supplying amount to the coil 14 so that a temperature detected by the temperature sensor 15 is maintained at a predetermined temperature. The frequency of the current to be supplied to the coil 14 is preferably set to a frequency capable of heating the surfaces of the carbon-iron metal powders 21 so as to heat only the silicon dioxide powders 22 contacting with the surfaces of the carbon-iron metal powders 21. In this embodiment, the current frequency to be supplied to the coil 14 is in a range of 3 KHz to 300 MHz inclusive. Consequently, the carbon-iron metal powders 21 are not excessively heated beyond the predetermined treatment temperature. It is therefore possible to prevent the silicon dioxide powders 22 not contacting with the carbon-iron metal powders 21 from being heated to the predetermined treatment temperature and sintered, and hence aggregating into a secondary particle.

CO gas generated in the siliconizing treatment is discharged out of the rotary furnace 2 through the discharge pipe 16 shown in FIG. 1 and replaced with process gas. Therefore, the internal pressure and atmosphere of the rotary furnace 2 are maintained constant from the start to the end of the siliconizing treatment. Such siliconizing treatment is performed in a release/diffusion atmosphere in which the reaction causing rate at which the silicon element releases from the silicon dioxide powders 22 is higher than the diffusion rate at which the silicon element is impregnated and diffused into the surface layers of the iron powders 24.

The controller 8 in FIG. 1 controls the rotary furnace 2 to rotate for a predetermined treatment time (or by the predetermined number of rotations) and then stops current supply to the coil 14 and rotation of the motor 7. Thus, the rotation of the rotary furnace 2 is stopped, and the iron powders 24 are no longer heated. After the rotary furnace 2 is cooled to room temperature, the door 9 is opened and powders 26 obtained by the siliconizing treatment shown in FIG. 13 are taken out. Each powder 26 is configured by the siliconizing treatment so that, as the siliconizing treatment time is longer, the distance X1 of the silicon impregnated layer 25 formed from the surface toward the center of the iron powder 24 is longer and the concentration of silicon element (Si concentration) of the silicon impregnated layer 25 is higher. In this embodiment, the distance X1 of the silicon impregnated layer 25 formed from the surface toward the center of the iron powder 24 is set to be not more than 0.15 times the diameter D of the iron powder 24.

The powders 26 obtained by the siliconizing treatment are then subjected to a coating treatment to form a silicone coating layer 27 on the surface of each powder 26 as shown in FIG. 14. In the coating treatment, the powders 26 obtained by the siliconizing treatment are put in a solution prepared by dissolving silicone resin in ethanol, and then agitated. After agitation for a predetermined time, it is further agitated while evaporating the ethanol, thereby fixing the silicone resin onto the surface of each powder 26. In this way, as shown in FIG. 15, dust core powders 28, in which the silicon impregnated layers 25 being coated with the silicone coating layers 27, are produced.

### <Method of manufacturing a dust core>

A method of manufacturing a dust core by compacting the dust core powder 28 produced as above will be explained below.

The dust core powder 28 is fed in a punch die including a cavity of a predetermined shape for a motor core and others. The dust core powder 28 is then subjected to pressure forming at a predetermined pressure and at a predetermined temperature. The pressure-formed product is taken out of the cavity and then subjected to a high-temperature annealing treatment to remove residual processing strain. In this way, a dust core of a predetermined shape is manufactured. The thus manufactured dust core is made of the dust core powder 28 in which the silicon impregnated layers 25 are formed as the surface layers of the iron powders 24 in a range of 0.15 times or less the diameter D of the iron powder 24. This allows the dust core powder 28 to be deformed moderately during pressure forming, thereby providing high magnetic core density and high magnetic flux density. Further, the dust core is made of the dust core powder 28 in which the distance X1 of the silicon impregnated layer 25 from the surface of the iron powder 24 and the Si concentration distribution in the silicon impregnated layer 25 are uniformized between powders. This makes it possible to ensure insulation of a contact surface of the dust core powder 28, reducing eddy current and increasing a specific resistance.

### Examples

FIG. 15 is a table showing conditions for the siliconizing treatment in a comparative example and the present embodiment.

In the present embodiment, the siliconizing treatment was carried out under the following conditions. A powder mixture prepared by mixing under agitation 95-97 weight% of carbon steel powder (iron powder) having a carbon content of 1.5 weight% and a mean particle diameter of 150 to 212 µm and 3-5 weight% of silicon dioxide powder having a mean particle diameter of 50 nm and a specific gravity of 2.2 is fed into a ceramic rotary furnace. Then, a mixed gas of argon (Ar) and hydrogen (H₂) of 30% with respect to a supply amount of argon is supplied to the rotary furnace. Simultaneously, discharge of air from the rotary furnace is started. A current of 100 MHz is supplied to the coil. After the temperature sensor detects that the iron powder have been heated to a treatment temperature of 1000°C, the rotary furnace is rotated at 25 rpm while a current of 100 MHz is being supplied to the coil. After the treatment time has passed by 1 hour in this state, the current supply to the coil and the rotation of the rotary furnace are stopped to terminate the siliconizing treatment.

On the other hand, in the comparative example, the siliconizing treatment was conducted under the following conditions. A powder mixture prepared by mixing under agitation 95-97 weight% of carbon steel powder (iron powder) having a carbon content of 1.5 weight% and a mean particle diameter of 150 to 212 µm and 3-5 weight% of silicon dioxide powder having a mean particle diameter of 50 nm and a specific gravity of 2.2 is fed into a rotary furnace made of SUS 301. Then, a mixed gas of argon (Ar) and hydrogen (H₂) of 30% with respect to a supply amount of argon is supplied to the rotary furnace. The rotary furnace remains stationary, and is heated by heaters. When the temperature sensor detects that the internal temperature of the rotary furnace is increased to a treatment temperature of 1000°C, the rotary furnace is rotated at a rotation speed of 25 rpm. The rotary furnace is continuously rotated for the treatment time of 1 hour while the internal temperature is kept at 1000°C. Thereafter, heating and rotating of the rotary furnace are stopped to terminate the siliconizing treatment.

### <Yield in Embodiment and Comparative example>

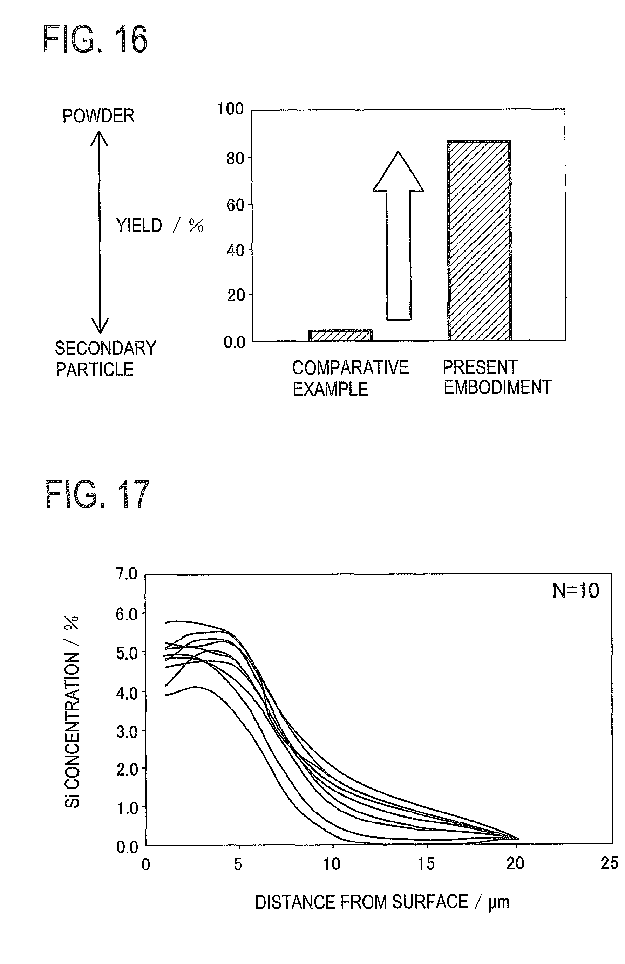

The inventors studied the yield in the preferred embodiment and the comparative example. The results are shown in FIG. 16. Herein, it is assumed that the rate of generation of secondary particles resulting from sintering of silicon dioxide powder is higher as the yield is closer to 0% and the rate of generation of secondary particles is lower (in a powdered state) as the yield is closer to 100%.

As shown in FIG. 16, the yield in the comparative example was about 5%. That is, in the comparative example, almost all the powder mixture supplied to the rotary furnace aggregated into secondary particles.

On the other hand, the yield in the embodiment was about 90%. In other word, in the embodiment, almost all the powder mixture supplied to the rotary furnace did not aggregate into secondary particles. Thus, a fine powder for dust core could be manufactured in which the silicon impregnated layer was formed on the surface of the iron powder.

The above experimental results verified that, during the siliconizing treatment, a manner of mixing the powder mixture under agitation while heating only the iron powder by induction heating using the coil could agitate the powder mixture without generating secondary particles and achieve high productivity of the powder for dust core as compared with a manner of mixing the powder mixture under agitation while heating the entire powder mixture by heaters.

### <Uniformizing of silicon impregnated layer>

The inventors randomly took out ten powders (particles) of the powder mixture of the present embodiment, cut them and observed each cut surface through an electronic microscope. The distance of the silicon impregnated layer formed from the surface toward the center of the iron powder was measured by powder for dust core. The measurement results are shown in FIG. 17.

As shown in FIG. 17, in all the powders randomly taken out, the iron powder and the silicon dioxide powder had oxidation-reduction reaction. In the powder, the Si concentration in the surface of the iron powder falls within a range of 4.0% or more and 6.0% or less. The powders are almost equal in a rate of decrease in Si concentration from the surface to the center of the iron powder. Further, in the powders, the silicon impregnated layer has a distance (silicon impregnated layer's thickness) of about 20 µm from the surface of the iron powder. The distances of the silicon impregnated layers from the surfaces of the iron powders are uniform among the powders.

Accordingly, the powder mixture is mixed under agitation while heating only the iron powders by induction heating to subject the iron powders to the siliconizing treatment. This verified that the powder for dust core in which iron powders have uniform silicon impregnated layers formed in surface layers can be manufactured with improved quality.

### (Second embodiment)

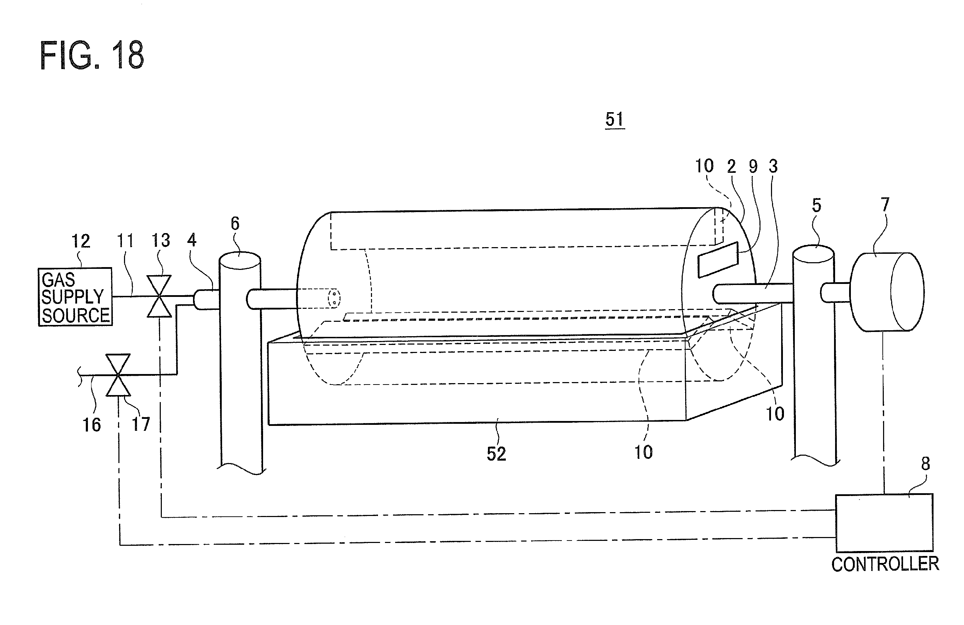

A second embodiment of the invention will be explained below. FIG. 18 is a schematic configuration view of a manufacturing apparatus 51 for a powder for dust core in the second embodiment.

This apparatus 51 has an identical configuration to that in the first embodiment, excepting a coil 52. The following explanation is therefore given with a focus on differences from the first embodiment. Identical or similar components are marked with the same reference signs as those in the first embodiment and their explanations are appropriately omitted.

The manufacturing apparatus 51 is configured such that the coil 52 made of a cylindrically wound coil is placed to surround a lower part of a rotary furnace 2 from every direction. Preferably, the coil 52 heats the lower half part of the rotary furnace 2. The reason is as below. A powder mixture 23 is scooped up by an agitating plate 10 moved to a lowermost position (a just below position) in the rotary furnace 2 until this agitating plate 10 is moved by 90° in association with rotation of the rotary furnace 2. Then, when the agitating plate 10 moved from the lowermost position to over 90° turns its orientation, the powder mixture 23 slips from the agitating plate 10 toward the bottom of the rotary furnace 2. As long as the lower half part of the rotary furnace 2 is heated, accordingly, almost all the carbon-iron metal powders 21 fed into the rotary furnace 2 are heated by induction heating.

In the above manufacturing apparatus 51, when the coil 52 is supplied with current, the carbon-iron metal powders 21 of the powder mixture 23 located in the lower part of the rotary furnace 2 are heated by induction heating. When the temperature sensor 15 detects that the surfaces of the carbon-iron metal powders 21 have been heated to a predetermined treatment temperature (e.g., 1000°C), the rotary furnace 2 is rotated, thereby mixing and agitating the powder mixture 23. Thus, as in the first embodiment, the iron powder 24 is subjected to the siliconizing treatment whereby the silicon impregnated layer 25 is formed in the surface of the iron powder 24.

The manufacturing apparatus 51 of the powder for dust core in the present embodiment is configured to intensively generate a magnetic field in the lower part of the rotary furnace 2 in which much powder mixture 23 is present, thereby heating the carbon-iron metal powders 21 of the powder mixture 23 existing in the lower part of the rotary furnace 2 by induction heating. The apparatus 51 generates a magnetic field in a smaller region than that generated by the coil 14 in the first embodiment. Consequently, it is possible to heat the carbon-iron metal powders 21 (the iron powders 24) with smaller electric power than heat the dust core powders 28 in the first embodiment.

The present invention is not limited to the above embodiments and may be embodied in other specific forms.
(1) For instance, in the above embodiments, the rotary furnace 2 is filled with an atmosphere of a mixed gas consisting of Ar and 30% of Hydrogen to the supply amount of Ar. The rotary furnace 2 may also have a vacuum atmosphere. As another alternative, the siliconizing treatment may be carried out in a reduced-pressure atmosphere, an atmosphere with a low partial pressure of the generated gas, i.e., an atmosphere with a low concentration of carbon monoxide (CO), or an atmosphere with a low concentration of nitrogen (N₂). The process gas may be any gas such as carbon gas as long as it accelerates the oxidation-reduction reaction of the soft magnetic metal powder and the powder for siliconizing.
(2) In the above embodiments, for example, the agitating plates 10 fixed to the inner wall of the rotary furnace 2 are arranged linearly in parallel with the axis of the rotary furnace. As an alternative, a spiral agitating plate may be fixed in the inner wall of the rotary furnace 2. In this case, the powder mixture supplied into the rotary furnace 2 are scooped up and dropped gradually by the spiral agitating plate in association with rotation of the rotary furnace 2. Accordingly, the powder mixture present in the bottom of the rotary furnace 2 is less likely to be compressed by the weight of the powder mixture dropping from above. This makes it possible to more surely prevent the powder mixture from aggregating into secondary particles and thereby to improve the yield of the powder for dust core.
(3) For instance, the above embodiments uses the carbon-iron metal powder 21 (the iron powder 24) as one example of the soft magnetic metal powder. Instead, the soft magnetic metal powder may also be selected from Fe-Si alloy, Fe-Al alloy, Fe-Si-Al alloy, titanium, aluminium, and others.
(4) For instance, the above embodiments use the silicon dioxide powder 22 as one example of the powder for siliconizing. Instead, the powder for siliconizing may also be selected from a powder mixture containing a powder including at least silicon dioxide and either or both of a metal carbide and a carbon allotrope, and a powder mixture containing a powder including silicon dioxide and a silicon carbide powder.

As another alternative, the soft magnetic powder may be an iron powder including at least oxygen element, and the powder for siliconizing may be a powder including at least carbon element.

## Claims

1. A method of manufacturing a powder for dust core, wherein a powder mixture of a soft magnetic metal powder and a powder for siliconizing including silicon dioxide is agitated and mixed while heating only the soft magnetic metal powder by induction heating, so that a silicon impregnated layer on a surface of the soft magnetic metal powder.

2. The method of manufacturing a powder for dust core according to claim 1, wherein
a rotary furnace into which the powder mixture is fed is made of an insulator,
a coil is placed outside the rotary furnace, and
the coil is supplied with current while the rotary furnace is rotated inside the coil to induction heat only the soft magnetic metal powder included in the powder mixture.

3. The method of manufacturing a powder for dust core according to claim 2, wherein
the coil has a hollow cylindrical form, and
the rotary furnace is placed in a hollow part of the coil.

4. A dust core made by pressing the powder for dust core manufactured by the dust core powder manufacturing method set forth in one of claims 1 to 3.

5. An apparatus for manufacturing a powder for dust core, comprising:
a rotary furnace into which a powder mixture comprising a soft magnetic metal powder and a powder for siliconizing including silicon dioxide is fed, the rotary furnace being held to be rotatable about an axis and provided with an agitating member placed in a protruding state from an inner wall of the rotary furnace;
a motor for driving the rotary furnace; and
a coil placed outside the rotary furnace to cover at least a bottom of the rotary furnace,
wherein the motor is driven to rotate the rotary furnace while the coil is supplied with current to induction heat only the soft magnetic metal powder to form a silicon impregnated layer on a surface of the soft magnetic metal powder.

6. The apparatus for manufacturing a powder for dust core according to claim 5, wherein the rotary furnace is made of an insulator.

7. The apparatus for manufacturing a powder for dust core according to claim 5 or 6, further comprising:
a temperature sensor for measuring a surface temperature of the soft magnetic metal powder, the temperature sensor being placed inside the rotary furnace, and
a controller for controlling a frequency of the current to be supplied to the coil so that temperature data measured by the temperature sensor is stable at a predetermined treatment temperature.
